# EUROPEAN PATENT APPLICATION

(11) **EP 4 386 904 A1**
(43) Date of publication of application: **19.06.2024**
(21) Application number: 23211785.3
(22) Date of filing: 23.11.2023
(51) Int. Cl.: H01M 4/38, H01M 4/485, H01M 4/525, H01M 10/052, H01M 10/0565, H01M 4/131, H01M 4/133, H01M 4/134, H01M 4/136

(54) **METHOD FOR PREPARING IN-SITU POLYMERIZED SEMI-SOLID STATE BATTERY**

(30) Priority: 29.11.2022 CN 202211505924
(71) Applicant: REPT BATTERO Energy Co., Ltd., Wenzhou, Zhejiang 325024 (CN); Shanghai Ruipu Energy Co., Ltd., Shanghai 201206 (CN)
(72) Inventor: CAO, Hui, Zhejiang, 325024 (CN); CUI, Yi, Shanghai, 201206 (CN); HOU, Min, Shanghai, 201206 (CN); FU, Lixin, Shanghai, 201206 (CN); LIU, Chan, Shanghai, 201206 (CN)
(74) Representative: Potter Clarkson

(57) **Abstract**

The present invention discloses a method for preparing an in-situ polymerized semi-solid state battery, comprising the following steps: assembling: assembling a cathode plate, a separator and an anode plate into a case to form a dummy cell; first injection: injecting a lithium battery liquid electrolyte; aging and formation; second injection: injecting a mixture of polymer monomers, a plasticizer and an initiator, wherein the polymer monomers are a combination of vinylene carbonate and tripropargyl phosphate; aging, and in-situ polymerization at 58-65°C to form gel, thus obtaining a low impedance semi-solid state battery. The formulation of the second injection of the present invention comprises a tridimensional monomer, and the liquid electrolyte can be locked in the three-dimensional structure after crosslinking. Compared with a chain polymer, fewer polymers can be used to achieve the gel effect, the formed gel structure is more stable and possesses better thermal stability, and at the same time, the liquid component is higher and the impedance is lower, so that the semi-solid state battery with low impedance is obtained.

## Description

### Technical Field

The present invention relates to the technical field of semi-solid state batteries, particularly a method for preparing in-situ polymerized semi-solid state batteries.

### Background Technology

With the increasingly urgent demand for improving the energy density of lithium ion batteries, traditional lithium ion batteries have been difficult to meet the demand of ultra-high specific energy. Current commercialized anode materials for lithium batteries are mainly modified natural graphite and artificial graphite. Although the preparation technology is quite mature, the theoretical specific capacity of graphite is only 372 mAh·g⁻¹, which is difficult to meet the market demand for high energy density lithium ion batteries. Therefore, based on the demand for high energy density batteries, anode materials with ultra-high specific energy advantages, for example, silicon anode, metal alloy anode, and metal lithium anode, have become a research hotspot. Taking silicon anode materials as an example, at present, a certain amount of silicon material is doped to achieve the purpose of improving the specific capacity. Taking the metal lithium anode as an example, its specific capacity is 3,860 mAh·g⁻¹, and the electrochemical potential is -3.04V (vs. standard hydrogen electrode). Battery made with these anode materials can effectively improve energy density, even reaching more than 400 Wh·kg⁻¹ or higher. High-nickel ternary lithium battery with high specific capacity anode materials improves the specific energy density, but because of the high activity of high-nickel ternary lithium battery, improving the safety of battery is of paramount importance.

However, based on the traditional lithium ion battery system, high energy density battery materials still have many safety hazards, such as the large volume expansion of the material itself, the change of structure, and the cycle life and safety hazards when matched with liquid electrolyte. Liquid electrolyte can not effectively inhibit the huge expansion of silicon anode, or the change of lithium metal anode structure and the growth of metal dendrites. The dendrites may pierce the separator and cause short circuit inside the battery, causing greater safety problems.

In-situ polymerized semi-solid state batteries can effectively reduce the amount of liquid electrolyte used in the battery, improve the energy density of the battery, and simultaneously reduce the potential safety hazards caused by liquid electrolyte. In addition, the semi-solid state gel electrolyte can effectively inhibit the change of anode structure and the growth of metal dendrites to a certain extent, and can greatly improve the safety of batteries while improving the specific energy. However, electrolyte formulation and manufacturing method of semi-solid state batteries will have a great impact on the impedance of the battery, especially the conventional in-situ polymerization method, which leads to the polymer participating in the composition of the anode SEI film, resulting in a significant increase in the impedance of the battery.

### Summary of the Invention

The object of the present invention is to provide a method for preparing an in-situ polymerized semi-solid state battery. The impedance of the semi-solid state battery is reduced, the energy density of the battery is improved and the safety of the battery is greatly improved through the optimized electrolyte formulation and dosage and the special manufacturing process.

The object of the present invention is fulfilled through the following technical solutions:
The present invention relates to a method for preparing an in-situ polymerized semi-solid state battery, comprising the following steps:
S1: assembly: assembling a cathode plate, a separator and an anode plate into a case to form a dummy cell;
S2: first injection: injecting a lithium battery liquid electrolyte;
S3: aging and formation;
S4: second injection: injecting a mixture of polymer monomers, a plasticizer and an initiator, wherein the polymer monomers are a combination of vinylene carbonate and tripropargyl phosphate;
S5: aging, and in-situ polymerization to form gel, thus obtaining the semi-solid state battery.

As an embodiment, a total amount of the second injection is 5-30 wt.% of the total amount of the first injection, preferably 10-20 wt.%, such as 11 wt.%, 12 wt.%, 13 wt.%, 14 wt.%, 15 wt.%, 16 wt.%, 17 wt.%, 18 wt.%, 19 wt.%, more preferably 10-15 wt.%. In the present invention, a total amount of the first injection refers to the mass of the lithium battery liquid electrolyte into the battery during the first injection. A total amount of the second injection refers to the total mass of the polymer monomers, the plasticizer, and the initiator injected into the battery during the second injection.

As an embodiment, the polymer monomers account for 70-95 wt.% of a total amount of the second injection (such as 70 wt.%, 72 wt.%, 74 wt.%, 74.9 wt.%, 76 wt.%, 78 wt.%, 80 wt.%, 82 wt.%, 84 wt.%, 86 wt.%, 88 wt.%, 90 wt.%, 92 wt.%, 94 wt.%, 95 wt.%), preferably 80-90 wt.%. The plasticizer accounts for 4.8-29.8 wt.% of a total amount of the second injection (such as 4.8 wt.%, 5.9 wt.%, 7 wt.%, 10 wt.%, 13 wt.%, 15 wt.%, 17 wt.%, 20 wt.%, 22 wt.%, 25 wt.%, 27 wt.%, 29 wt.%, 29.8 wt.%). The initiator accounts for 0.01-0.4 wt.% of a total amount of the second injection (such as 0.01 wt.%, 0.05 wt.%, 0.1 wt.%, 0.15 wt.%, 0.2 wt.%, 0.25 wt.%, 0.3 wt.%, 0.35 wt.%, 0.4 wt.%), preferably 0.05 to 0.1 wt.%.

As an embodiment, a mass ratio of vinylene carbonate (VC) to tripropargyl phosphate (TPP) in the polymer monomers is 10:1-100:1, preferably 20:1-50:1, such as 30:1 and 40:1. VC is the main polymer monomer, and TPP is the auxiliary polymer monomer. TPP contains phosphoric acid structure, which can reduce the impedance of semi-solid state electrolyte. If the VC content is too high, the impedance of the battery will be significantly increased; if the VC content is too low, the electrolyte will be difficult to gel, and the semi-solid state electrolyte can not be effectively formed.

In some embodiments, the plasticizer comprises one or more of tetraethyl silicate, epoxy-grafted cage-type epoxy polyhedral oligomeric silsesquioxane, boric acid, and silicon tetrachloride.

As an embodiment, the plasticizer is one or more of tetraethyl silicate (TEOS), epoxy-grafted cage-type epoxy polyhedral oligomeric silsesquioxane (EP-POSS), boric acid (BA), and silicon tetrachloride (SiCl₄). The preferred plasticizer is epoxy-grafted cage-type epoxy polyhedral oligomeric silsesquioxane (EP-POSS). EP-POSS has a cage-like structure, which can lock the liquid electrolyte in the cage-like structure, reduce the flow of the liquid electrolyte, and improve safety performance.

In some embodiments, the initiator comprises one or more of 2,2'-azobis(2-methylpropionitrile), 2,2'-azobis(2,4-dimethyl)valeronitrile, dimethyl 2,2'-azobis(2-methylpropionate) and benzoyl peroxide.

As an embodiment, the initiator is one or more of 2,2'-azobis(2-methylpropionitrile) (AIBN), 2,2'-azobis(2,4-dimethyl)valeronitrile, dimethyl 2,2'-azobis(2-methylpropionate) and benzoyl peroxide (BPO). In some embodiments, the initiators are AIBN and BPO.

As an embodiment, in step S3, an aging temperature is 20-50°C and an aging time is 22-26 hours. Preferably, the aging temperature is 45-48 °C and the aging time is 24 hours.

As an embodiment, in step S3, a formation temperature is 40±5°C, and a formation pressure is 2,000N-4,000N, such as 2,500N, 3,000N, 3,500N.

As an embodiment, in step S5, an aging temperature is 20-50°C and an aging time is 22-26 hours. Preferably, the aging temperature is 45-48 °C and the aging time is 24 hours. In some embodiments, in step S5, the aging temperature is 25±5°C and the aging time is 24±2 hours.

In some embodiments, in step S5, in-situ polymerization is performed at 58-65°C to form gel.

In some embodiments, in step S5, a temperature of in-situ polymerization is 60 + 2°C.

As an embodiments, in step S5, a time of in-situ polymerization is 1.25-3 hours, such as 1.5 hours, 2 hours, and 2.5 hours.

In some embodiments, in step S2, the lithium battery liquid electrolyte contains a lithium salt, a solvent, and an additive.

In some embodiments, the lithium salt in the lithium battery liquid electrolyte comprises one or more of lithium hexafluorophosphate, lithium bis(fluorosulfonyl)imide, lithium bis((trifluoromethyl)sulfonyl)imide, lithium trifluoromethanesulfonate, lithium tetrafluoroborate, lithium bis(oxalate)borate, lithium difluoro(oxalato)borate and lithium difluorobis(oxalato)phosphate.

As an embodiment, in step S2, the lithium salt in the lithium battery liquid electrolyte is one or more of lithium hexafluorophosphate (LiPF₆), lithium bis(fluorosulfonyl)imide (LiFSI), lithium bis((trifluoromethyl)sulfonyl)imide (LiTFSI), lithium trifluoromethanesulfonate (LiCF₃SO₃), lithium tetrafluoroborate (LiBF₄), lithium bis(oxalate)borate (LiBOB), lithium difluoro(oxalato)borate (LiODFB) and lithium difluorobis(oxalato)phosphate (LiDFBP). In some embodiments, the lithium salts comprise lithium hexafluorophosphate and lithium bis(fluorosulfonyl)imide. A mass percentage of the lithium salt in the lithium battery liquid electrolyte may be 5-30 wt.%, such as 10 wt.%, 15 wt.%, 20 wt.%, 23 wt.%, 25 wt.%, 27 wt.%.

In some embodiments, in step S2, the solvent is one or more selected from the group consisting of ethylene carbonate (EC), ethyl methyl carbonate (EMC), diethyl carbonate (DEC), propylene carbonate, dimethyl carbonate, γ-butyrolactone, methyl acetate, ethyl acetate, propyl acetate, butyl acetate, ethyl propionate, propyl propionate, and butyl propionate. In some embodiments, the solvents comprise EC, EMC, and DEC. A mass percentage of the solvent in the lithium battery liquid electrolyte may be 60-90 wt.%, for example, 65 wt.%, 70 wt.%, 75 wt.%, 80 wt.%, 85 wt.%.

In some embodiments, in step S2, the additive is one or more selected from the group consisting of lithium difluorophosphate (LiPO₂F₂), fluoroethylene carbonate (FEC), ethylene sulfate (DTD), vinylene carbonate, 4-vinyl-1,3-dioxolan-2-one, 1,3-propanesultone, prop-1-ene-1,3 -sultone, tris(trimethylsilyl)phosphite, tris(trimethylsilyl)borate, lithium bis(fluorosulfonyl)imide, lithium bis(oxalate)borate, lithium tetrafluoroborate, and lithium difluorobis(oxalato)phosphate. In some embodiments, the additives comprise LiPO₂F₂, FEC, and DTD. A mass percent of the additive in the lithium battery liquid electrolyte may be 2-10 wt.%, such as 3 wt.%, 4 wt.%, 5 wt.%, 6 wt.%, 7 wt.%, 8 wt.%, 9 wt.%.

As an embodiment, a silicon doped graphite anode, a lithium metal anode or a metal alloy anode is employed in the anode plate. An amount of silicon doped in the silicon doped graphite anode is 3-80 wt.%, such as 4 wt.%, 5 wt.%, 10 wt.%, 20 wt.%, 30 wt.%, 40 wt.%, 50 wt.%, 60 wt.%, preferably 5-60 wt.%, further preferably 8-30 wt.%. The metal alloy anode comprises Ga-Sn, Ge-Se, or Sn-Al alloy anode. The anode materials in silicon doped graphite anode comprise graphite and a silicon-containing material. In some embodiments, the anode materials in the silicon doped graphite anode are composed of graphite and a silicon containing material. The amount of silicon doped in the silicon doped graphite anode refers to the mass fraction of the silicon containing materials in the anode materials. The silicon containing material may comprise at least one of a silicon-oxygen material and a silicon-carbon material.

As an embodiment, a high nickel material (NCM811, Ni90), NCM111, NCM532, NCM622, NCM712, a nickel cobalt aluminum material (NCA), lithium manganese iron phosphate (LMFP) or lithium iron phosphate (LiFePO₄) is employed as a material of the cathode plate (cathode material). A structural formula of Ni90 is LiNiₓCo_{y}Mn_{z}O₂, wherein x≥0.8. In some embodiments, in Ni90 structural formula LiNiₓCo_{y}Mn_{z}O₂, x≥0.8, y≥0, z≥0, x+y+z=1. In some embodiments, in Ni90 structural formula LiNiₓCo_{y}Mn_{z}O₂, x≥0.9, y≥0, z≥0, x+y+z=1. NCM811, NCM111, NCM532, NCM622, and NCM712 represents nickel cobalt manganese ternary cathode material with a mass ratio of 8:1:1, 1:1:1, 5:3:2, 6:2:2, and 7:1:2 for Ni, Co, and Mn atoms, respectively.

As an embodiment, a conductive agent needs to be mixed to both the cathode plate and the anode plate, specifically one or more of carbon black (super P), acetylene black, multi-walled carbon nanotube (MWCNT), and single-walled carbon nanotube (SWCNT).

As an embodiment, both the cathode plate and anode plate require a binder, specifically one or more of PEO (polyethylene oxide), PVDF (polyvinylidene fluoride), CMC (sodium carboxymethyl cellulose), PU (polyurethane), SBR (styrene-butadiene rubber), PVA (polyvinyl alcohol), PAA (polyacrylic acid) and PAN (polyacrylonitrile).

Compared with the prior art, the present invention has the following beneficial effects:
1) The present invention utilizes the technique of in-situ polymerization method to produce and manufacture semi-solid state battery. The present invention forms a semi-solid state battery with low impedance by first injecting a conventional liquid electrolyte, formation, then injecting polymer monomers, and in-situ polymerization.
2) The formulation of the second injection comprises tripropargyl phosphate (TPP) as a tridimensional monomer, and the liquid electrolyte can be locked in the three-dimensional structure after crosslinking. Compared with a chain polymer, fewer polymer can be used to achieve the gel effect, the formed gel structure is more stable and possesses better thermal stability, and at the same time, the liquid component is higher and the impedance is lower.
3) The method of the present invention is simple and compatible with existing conventional liquid battery production processes. The semi-solid state battery produced by the method has an impedance close to that of a liquid battery, greatly improving the disadvantage of high impedance in existing semi-solid state battery.

### Brief Description of the Drawings

By reading the detailed description of non-limiting embodiments with reference to the following drawings, the other features, objects, and advantages of the present invention will become more apparent:
FIG. 1 is a flowchart of the preparation of an in-situ polymerized semi-solid state battery;
FIG. 2 is a 50%SOC 3C DCIR graph of a semi-solid state battery of Example 1 under 25°C.

### Detailed Description

The preparation process of an in-situ polymerized semi-solid state battery of the invention is as follows:
The preparation process of the dummy cell in the Examples and the Comparative Examples of the present invention is as follows:
Firstly, mixing slurry, wherein the ratio of the cathode slurry is as follows: 9-series ternary material (NCM-Ni90, the chemical formula of which is LiNi_{0.9}Co_{0.05}Mn_{0.05}O₂): conductive carbon black (Super P): carbon nanotube (CNT800): binder (PVDF_1100) = 97: 1.1: 0.8: 1.1, all in weight percent (wt.%);
The anode slurry ratio is: graphite (BF): silicon oxide material (Si-O, from Lanxi Zhide New Energy Materials Co., Ltd., code S0210): conductive carbon black (Super P): carbon nanotube (CNT800): binder (sodium carboxymethyl cellulose CMC_500): binder (styrene-butadiene rubber SBR) =88.1:6.5:1.8:0.2:1.2:2.2, all in weight percentage (wt.%);
Then coating is carried out, the cathode slurry is coated on the aluminum foil, the anode slurry is coated on the copper foil, and drying and winding are carried out. After that, rolling is carried out, and then slitting is carried out. Afterwards, the manufactured cathode plate and anode plate and a separator are used for cell winding. The separator is a PE separator (3 µm PVDF adhesive layer + 9 µm base film + 3 µm Al₂O₃ ceramic layer + 3 µm PVDF adhesive layer). After hot pressing the wound cell, a top cover is welded, and then the cell is assembled into a case to form a dummy cell.

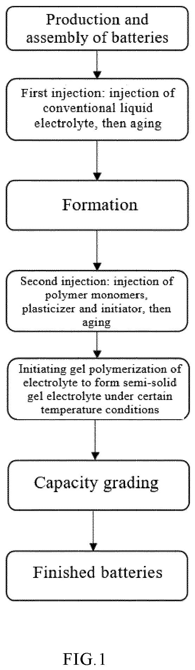

Injection is carried out after baking the dummy cell. As shown in FIG. 1, after the battery is assembled, a certain amount of a conventional lithium battery liquid electrolyte is injected in the first injection. The electrolyte is a conventional lithium battery liquid electrolyte and comprises a lithium salt (which can be one or more of lithium hexafluorophosphate (LiPF₆), lithium bis(fluorosulfonyl)imide (LiFSI), lithium bis((trifluoromethyl)sulfonyl)imide (LiTFSI), lithium trifluoromethanesulfonate (LiCF₃SO₃), lithium tetrafluoroborate (LiBF₄), lithium bis(oxalate)borate (LiBOB), lithium difluoro(oxalato)borate (LiODFB), and lithium difluorobis(oxalato)phosphate (LiDFBP)). After injection, an aging process is carried out. The aging temperature is 20-50°C, preferably 45-48°C, and the aging time is 24 hours. After aging, a conventional formation process is carried out. The formation temperature is 40±5°C, and the pressure is 2,000N. After formation, a mixture of polymer monomers, a plasticizer and an initiator is injected in the second injection (the total amount of the second injection is 5-30 wt.% of the amount of the first injection, preferably 10-20 wt.%). The polymer monomers account for 70-95 wt.% of the amount of the second injection, preferably 80-90 wt.%. The composition of the polymer monomers is a combination of vinylene carbonate (VC) and tripropargyl phosphate (TPP). A mass ratio of VC:TPP is 10:1-100:1, preferably 20:1-50:1. The plasticizer accounts for 4.8-29.8 wt.% of the amount of the second injection. The plasticizer is one or more of tetraethyl silicate (TEOS), epoxy-grafted cage-type epoxy polyhedral oligomeric silsesquioxane (EP-POSS), boric acid (BA), and silicon tetrachloride (SiCl₄), preferably epoxy-grafted cage-type epoxy polyhedral oligomeric silsesquioxane (EP-POSS). The initiator accounts for 0.01-0.4 wt.% of the amount of the second injection, preferably 0.05-0.1 wt.%. The initiator is one or more of 2,2'-azobis(2-methylpropionitrile) (AIBN), 2,2'-azobis(2,4-dimethyl)valeronitrile (ABVN), dimethyl 2,2'-azobis(2-methylpropionate) (AIBME) and benzoyl peroxide (BPO). After injection, aging is carried out. The aging temperature is 20-50°C, preferably 25±5°C, and the aging time is 24±2 hours. The temperature for in-situ polymerization after aging is 58-65 °C , and the time for in-situ polymerization is 1.25-3 hours. Some additives in the electrolyte may become unstable under prolonged high temperatures, which can easily lead to undesirable decomposition side reactions with electrode materials. Therefore, it is necessary to control the temperature not too high and the time not too long. After that, a normal capacity grading process can be carried out to produce the finished battery.

The following will provide a detailed explanation of the present invention in conjunction with Examples. The following Examples will help those skilled in the art to further understand the invention, but are not intended to limit the invention in any way. It should be noted that numerous modifications and improvements will occur to those ordinary skill in the art without departing from the spirit of the invention. They are within the protection scope of the present invention.

### Example 1

After the dummy cell was baked, first injection was carried out. 450g conventional lithium battery liquid electrolyte was injected in the first injection. The conventional electrolyte was ethylene carbonate (EC): ethyl methyl carbonate (EMC): diethyl carbonate (DEC): lithium hexafluorophosphate (LiPF₆): lithium bis(fluorosulfonyl)imide (LiFSI): lithium difluorophosphate (LiPO₂F₂): fluoroethylene carbonate (FEC): ethylene sulfate (DTD)=22: 28.2: 20: 12: 12: 0.5: 4.5: 0.8, all in weight percent (wt.%). After the first injection, the aging process was carried out at a temperature of 45 °C for 24 hours. Cell formation was then carried out under high temperature and high pressure conditions (the temperature was 40±5 °C, and the pressure was 2,000N controlled by fixtures). Second injection was carried out after formation, and the amount of the second injection was 50g. The components of the second injection were vinylene carbonate (VC): tripropargyl phosphate (TPP): epoxy-grafted cage-type epoxy polyhedral oligomeric silsesquioxane (EP-POSS): 2,2'-azobis(2-methylpropionitrile) (AIBN): benzoyl peroxide (BPO) = 87.1: 2.9: 9.9: 0.08: 0.02, all in weight percent (wt.%). After aging at 25°C for 24 hours, the battery was put into a high temperature environment at 60°C for gel reaction for 2 hours, which initiated the gel polymerization of the electrolyte to form a semi-solid state gel electrolyte. Finally, the finished battery was obtained by capacity grading at room temperature.

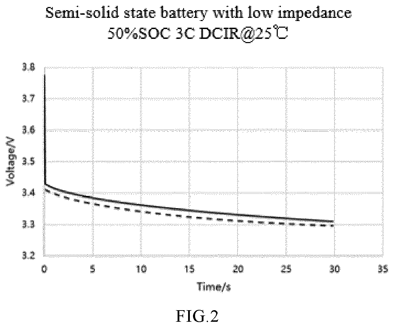

FIG. 2 is the 50%SOC 3C DCIR graph of the semi-solid state battery prepared in this example under 25 °C. The specific method is as follows: after the cell is adjusted to 50%SOC, it is placed in an oven at 25°C, and the battery is discharged with a current of 3C for 30s. The graph can be obtained by taking the discharge time as the abscissa and the voltage as the ordinate. Through calculation, the impedance of the battery is 53.3mΩ, which is equivalent to the impedance of a liquid cell.

### Examples 2-5

Examples 2-5 provide methods for preparing in-situ polymerized low-impedance semi-solid state batteries. The methods are basically the same as that in Example 1, and the specific injection amount and electrolyte composition are shown in Table 1.

### Examples 6-7

Examples 6-7 provide methods for preparing in-situ polymerized low-impedance semi-solid state batteries. Except for different types of plasticizers, other process parameters are the same as those in Example 1. The specific injection amount and electrolyte composition are shown in Table 2.

### Comparative Example 1

After the dummy cell was baked, 500g electrolyte was injected (the electrolyte in this comparative example was a mixture of a conventional electrolyte, polymer monomers, a plasticizer and initiators). The composition of the electrolyte for the first injection was EC: EMC: DEC: LiPF₆: LiFSI: LiPO₂F₂: FEC: DTD: VC: TPP: EP-POSS: AIBN: BPO=19.8: 25.38: 18: 10.8: 10.8: 0.45: 4.05: 0.72: 8.71: 0.29: 0.99: 0.008: 0.002, all in weight percent (wt.%). After the injection, an aging process was carried out at a temperature of 45°C for 24 hours. The battery was then put into a high temperature environment at 60°C for gel reaction for 2 hours, which initiated the gel polymerization of the electrolyte to form a semi-solid state gel electrolyte. Cell formation was then carried out under high temperature and high pressure conditions (the temperature was 40±5°C, and the pressure was 2,000N controlled by fixtures). An aging process was carried out at a temperature of 25°C for 24 hours. The finished battery was obtained by capacity grading at room temperature.

### Comparative Example 2

After the dummy cell was baked, 450g conventional lithium battery liquid electrolyte was injected. The conventional electrolyte was EC: EMC: DEC: LiPF₆: LiFSI: LiPO₂F₂: FEC: DTD = 22: 28.2: 20: 12: 12: 0.5: 4.5: 0.8, all in weight percent (wt.%). After the first injection, an aging process was carried out at a temperature of 45°C for 24 hours. Cell formation was then carried out under high temperature and high pressure conditions (the temperature was 40±5°C, and the pressure was 2,000N controlled by fixtures). Second injection was carried out after formation, and the amount of the second injection was 50g. The components of the second injection were VC: trimethylene carbonate (TMC): EP-POSS: AIBN: BPO=87.1: 2.9: 9.9: 0.08: 0.02, all in weight percent (wt.%). After aging at 25°C for 24 hours, the battery was put into a high temperature environment at 60°C for gel reaction for 2 hours, which initiated the gel polymerization of the electrolyte to form a semi-solid state gel electrolyte. Finally, the finished battery was obtained by capacity grading at room temperature.

### Comparative Example 3

After the dummy cell was baked, 450g conventional lithium battery liquid electrolyte was injected. The conventional electrolyte was EC: EMC: DEC: LiPF₆: LiFSI: LiPO₂F₂: FEC: DTD = 22: 28.2: 20: 12: 12: 0.5: 4.5: 0.8, all in weight percent (wt.%). After the first injection, an aging process was carried out at a temperature of 45°C for 24 hours. Cell formation was then carried out under high temperature and high pressure conditions (the temperature was 40±5°C, and the pressure was 2,000N controlled by fixtures). Second injection was carried out after formation, and the amount of the second injection was 50g. The components of the second injection were VC: TPP: succinonitrile (SN): AIBN: BPO=87.1: 2.9: 9.9: 0.08: 0.02, all in weight percent (wt.%). After aging at 25°C for 24 hours, the battery was put into a high temperature environment at 60°C for gel reaction for 2 hours, which initiated the gel polymerization of the electrolyte to form a semi-solid state gel electrolyte. Finally, the finished battery was obtained by capacity grading at room temperature.

### Comparative Example 4

After the dummy cell was baked, 450g conventional lithium battery liquid electrolyte was injected. The conventional electrolyte was EC: EMC: DEC: LiPF₆: LiFSI: LiPO₂F₂: FEC: DTD = 22: 28.2: 20: 12: 12: 0.5: 4.5: 0.8, all in weight percent (wt.%). After the first injection, an aging process was carried out at a temperature of 45°C for 24 hours. Cell formation was then carried out under high temperature and high pressure conditions (the temperature was 40±5°C, and the pressure was 2,000N controlled by fixtures). Second injection was carried out after formation, and the amount of the second injection was 50g. The components of the second injection were VC: EP-POSS: AIBN: BPO=90: 9.9: 0.08: 0.02, all in weight percent (wt.%). After aging at 25°C for 24 hours, the battery was put into a high temperature environment at 60°C for gel reaction for 2 hours, which initiated the gel polymerization of the electrolyte to form a semi-solid state gel electrolyte. Finally, the finished battery was obtained by capacity grading at room temperature.

### Comparative Example 5

After the dummy cell was baked, 450g conventional lithium battery liquid electrolyte was injected. The conventional electrolyte was EC: EMC: DEC: LiPF₆: LiFSI: LiPO₂F₂: FEC: DTD=22: 28.2: 20: 12: 12: 0.5: 4.5: 0.8, all in weight percent (wt.%). After the first injection, an aging process was carried out at a temperature of 45°C for 24 hours. Cell formation was then carried out under high temperature and high pressure conditions (the temperature was 40±5°C, and the pressure was 2,000N controlled by fixtures). Second injection was carried out after formation, and the amount of the second injection was 50g. The components of the second injection were VC: tert-butyl peroxide = 99.5: 0.5 (mass percent (wt.%)), all in weight percent (wt.%). After aging at 25 °C for 24 hours, the battery was put into a high temperature environment at 60 °C for gel reaction for 2 hours, which initiated the gel polymerization of the electrolyte to form a semi-solid state gel electrolyte. Finally, the finished battery was obtained by capacity grading at room temperature. The structural formula of tert-butyl peroxide is

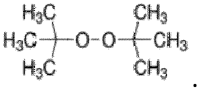

Performance test: after the batteries obtained in each Example and Comparative Example are adjusted to 50%SOC, they are placed in an oven at 25°C, and the batteries are discharged with a current of 3C for 30s. The graph can be obtained by taking the discharge time as the abscissa and the voltage as the ordinate. The impedances of the batteries of the Examples and the Comparative Examples are obtained by calculation, and the specific impedance values are shown in Table 1 and Table 2.

**Table 1**

| | | | Example | | | | | Comparative Example | | | | |
|---|---|---|---|---|---|---|---|---|---|---|---|---|
| | | | 1 | 2 | 3 | 4 | 5 | 1 | 2 | 3 | 4 | 5 |
| Firs t inje ctio n | Injection amount/g | | 450 | 450 | 450 | 450 | 420 | 500 | 450 | 450 | 450 | 450 |
| | C o m p o si ti o n | Conventional liquid electrolyte (wt.%) | 100 | 100 | 100 | 100 | 100 | 90 | 100 | 100 | 100 | 100 |
| | | VC (wt.%) | | | | | | 8.71 | | | | |
| | | TPP (wt.%) | | | | | | 0.29 | | | | |
| | | EP-POSS (wt.%) | | | | | | 0.99 | | | | |
| | | AIBN (wt.%) | | | | | | 0.008 | | | | |
| | | BPO (wt.%) | | | | | | 0.002 | | | | |
| Sec ond inje ctio n | Injection amount/g | | 50 | 50 | 50 | 50 | 80 | | 50 | 50 | 50 | 50 |
| | C o m p o si ti o n | VC (wt.%) | 87.1 | 92.1 | 71.3 | 87.1 | 87.1 | | 87.1 | 87.1 | 90 | 99.5 |
| | | TPP (wt.%) | 2.9 | 1.9 | 3.6 | 2.9 | 2.9 | | | 2.9 | - | |
| | | TMC (wt.%) | | | | | | | 2.9 | | | |
| | | EP-POSS (wt.%) | 9.9 | 5.9 | 25 | | 9.9 | | 9.9 | | 9.9 | |
| | | TEOS (wt.%) | | | | 9.9 | | | | | | |
| | | SN (wt.%) | | | | | | | | 9.9 | | |
| | | AIBN (wt.%) | 0.08 | 0.08 | 0.08 | 0.08 | 0.08 | | 0.08 | 0.08 | 0.08 | |
| | | BPO (wt.%) | 0.02 | 0.02 | 0.02 | 0.02 | 0.02 | | 0.02 | 0.02 | 0.02 | |
| | | Tert-butyl peroxide (wt.%) | | | | | | | | | | 0.5 |
| DCIR/mQ | | | 53.3 | 55.1 | 56.5 | 57.4 | 55.7 | 80.02 | 63.4 | 64.5 | 64.8 | 65.34 |

**Table 2**

| | | Example | | |
|---|---|---|---|---|
| | | 6 | 7 | |
| First injection | Injection amount/g | 450 | 450 | |
| | Composition | Conventional liquid electrolyte (wt.%) | 100 | 100 |
| Second injection | Injection amount/g | | 50 | 50 |
| | Composition | VC (wt.%) | 87.1 | 87.1 |
| | | TPP (wt.%) | 2.9 | 2.9 |
| | | BA (wt.%) | 9.9 | |
| | | SiCl₄ (wt.%) | | 9.9 |
| | | AIBN (wt.%) | 0.08 | 0.08 |
| | | BPO (wt.%) | 0.02 | 0.02 |
| DCIR/mΩ | | | 56.8 | 57.1 |

The impedances of the batteries in Examples 1-7 are close to that of the liquid cell, indicating that the preparation method of the present invention can effectively reduce the impedance of the semi-solid state battery.

Example 1, Example 4, Example 6, and Example 7 differ in the plasticizers. From the experimental results, it can be seen that the use of EP-POSS as the plasticizer in Example 1 is advantageous in reducing the impedance.

The differences between Example 1, Example 2 and Example 3 are that the weight percents of the polymer monomers in the second injection amount are different. From the experimental results, it can be seen that controlling the weight percent of the polymer monomers in the amount of the second injection to be 80-90 wt.% in Example 1 is beneficial to reducing the impedance.

The difference between Example 1 and Example 5 is that the second injection amount is different from the first injection amount. It can be seen from the experimental results that in Example 1, controlling the second injection amount to 10-15 wt.% of the first injection amount is beneficial to reducing the impedance.

The difference between Example 1 and Comparative Example 1 is that the injection is not divided into two parts in Comparative Example 1. The results show that the impedance of the battery in Example 1 is significantly lower than that of the battery in Comparative Example 1, indicating that the preparation method of the present invention can effectively reduce the impedance of the semi-solid state battery.

The differences between Example 1 and Comparative Examples 2 and 4 are that Comparative Example 2 does not use TPP but TMC as the auxiliary polymer monomer, and Comparative Example 4 does not use the auxiliary polymer monomer. The results show that the impedance of the battery of Example 1 is lower than those of the batteries of Comparative Examples 2 and 4, indicating that the use of TPP as an auxiliary polymer monomer can effectively reduce the impedance of the semi-solid state battery.

The difference between Examples 1, 4, 6 and 7 and Comparative Example 3 is that Comparative Example 3 uses SN as the plasticizer. The results show that the impedances of the batteries of Examples 1, 4, 6 and 7 are lower than that of the battery of Comparative Example 3, indicating that the use of TEOS, EP-POSS, BA or SiCl₄ as the plasticizer can effectively reduce the impedance of the semi-solid state battery.

The difference between Example 1 and Comparative Example 5 is that no auxiliary polymer monomer is used and tert-butyl peroxide is used as the initiator in Comparative Example 5. The results show that the impedance of the battery of Example 1 is lower than that of the battery of Comparative Example 5, indicating that the use of the auxiliary polymer monomer in combination with the initiators AIBN and BPO can effectively reduce the impedance of the semi-solid state battery.

The specific embodiments of the present invention have been described above. It should be understood that the present invention is not limited to the specific embodiments mentioned above. Those skilled in the art can make various variations or modifications within the scope of the claims, which does not affect the substantive content of the present invention.

## Claims

1. A method for preparing an in-situ polymerized semi-solid state battery, wherein the method comprises the following steps:
S1: assembling: assembling a cathode plate, a separator and an anode plate into a case to form a dummy cell;
S2: first injection: injecting a lithium battery liquid electrolyte;
S3: aging and formation;
S4: second injection: injecting a mixture of polymer monomers, a plasticizer and an initiator, wherein the polymer monomers are a combination of vinylene carbonate and tripropargyl phosphate;
S5: aging, and in-situ polymerization to form gel, thus obtaining the semi-solid state battery.

2. The method for preparing an in-situ polymerized semi-solid state battery of claim 1, wherein the total amount of the second injection is 5-30 wt.% of the total amount of the first injection.

3. The method for preparing an in-situ polymerized semi-solid state battery of claim 1, wherein the polymer monomers account for 70-95 wt.% of the total amount of the second injection, the plasticizer accounts for 4.8-29.8 wt.% of the total amount of the second injection, the initiator accounts for 0.01-0.4 wt.% of the total amount of the second injection, and a mass ratio of vinylene carbonate to tripropargyl phosphate in the polymer monomers is 10:1-100:1.

4. The method for preparing an in-situ polymerized semi-solid state battery of claim 1, wherein the plasticizer comprises one or more of tetraethyl silicate, epoxy-grafted cage-type epoxy polyhedral oligomeric silsesquioxane, boric acid, and silicon tetrachloride.

5. The method for preparing an in-situ polymerized semi-solid state battery of claim 1, wherein the initiator comprises one or more of 2,2'-azobis(2-methylpropionitrile), 2,2'-azobis(2,4-dimethyl)valeronitrile, dimethyl 2,2'-azobis(2-methylpropionate) and benzoyl peroxide.

6. The method for preparing an in-situ polymerized semi-solid state battery of claim 1, wherein in step S3, an aging temperature is 20-50°C, an aging time is 22-26 hours, a formation temperature is 40 + 5 °C, and a formation pressure is 2,000N-4,000N.

7. The method for preparing an in-situ polymerized semi-solid state battery of claim 1, wherein in step S5, an aging temperature is 20-50°C, an aging time is 22-26 hours, and a time of in-situ polymerization is 1.25-3 hours.

8. The method for preparing an in-situ polymerized semi-solid state battery of claim 1, wherein in step S2, a lithium salt in the lithium battery liquid electrolyte comprises one or more of lithium hexafluorophosphate, lithium bis(fluorosulfonyl)imide, lithium bis((trifluoromethyl)sulfonyl)imide, lithium trifluoromethanesulfonate, lithium tetrafluoroborate, lithium bis(oxalate)borate, lithium difluoro(oxalato)borate and lithium difluorobis(oxalato)phosphate.

9. The method for preparing an in-situ polymerized semi-solid state battery of claim 1, wherein a silicon doped graphite anode, a lithium metal anode or a metal alloy anode is employed in the anode plate, an amount of silicon doped in the silicon doped graphite anode is 3-80 wt.%, and the metal alloy anode comprises Ga-Sn, Ge-Se, or Sn-Al alloy anode.

10. The method for preparing an in-situ polymerized semi-solid state battery of claim 1, wherein NCM811, Ni90, NCM111, NCM532, NCM622, NCM712, a nickel cobalt aluminum material, lithium manganese iron phosphate or lithium iron phosphate is employed as a material of the cathode plate, and the structural formula of Ni90 is LiNiₓCo_{y}Mn_{z}O₂, wherein x≥0.8.

11. The method for preparing an in-situ polymerized semi-solid state battery of claim 10, wherein in the structural formula of Ni90 LiNiₓCo_{y}Mn_{z}O₂, y≥0, z≥0, x+y+z=1.

12. The method for preparing an in-situ polymerized semi-solid state battery of claim 1, wherein in step S5, in-situ polymerization is performed at 58-65°C to form gel.
